# EUROPÄISCHE PATENTSCHRIFT

(11) **EP 0 596 219 B1**
(45) Veröffentlichungstag und Bekanntmachung des Hinweises auf die Patenterteilung: **30.07.1997**
(21) Anmeldenummer: 93114554.4
(22) Anmeldetag: 10.09.1993
(51) Int. Cl.: F16F 3/02

(54) **Verfahren zum Verbinden der Gurtenden von Förderbändern und Verbindungsmittel hierfür**
Method for joining the end of conveyor belts and fastening device therefor
Procédé de jonction d'éxtremités de convoies transporteurs et élément de jonction correspondant

(30) Priorität: 23.10.1992 DE 4235759
(43) Veröffentlichungstag der Anmeldung: 11.05.1994
(73) Patentinhaber: MATO Maschinen- und Metallwarenfabrik Curt Matthaei GmbH & Co KG, D-63071 Offenbach (DE)
(72) Erfinder: Herold, Wolfgang, D-63075 Offenbach-Bürgel (DE)
(74) Vertreter: Schieferdecker, Lutz, Dipl.-Ing.

(56) Entgegenhaltungen:
- EP-A- 0 326 506
- FR-A- 1 271 657
- FR-A- 1 278 029
- FR-E- 81 099
- GB-A- 13 990
- GB-A- 1 293 455

## Beschreibung

Die Erfindung betrifft ein Förderband sowie ein Verfahren zum Verbinden der Gurtenden von Förderbändern und/oder von Förderbandstücken und Verbindungsmittel hierfür gemäß den Oberbegriffen der Ansprüche 1, 6 und 9.

Es ist bekannt, die Gurtenden von Förderbändern und/oder von Förderbandstücken mit Hilfe von an den Gurtenden befestigbaren Verbindungselementen zu verbinden, wobei die Verbindungselemente selbst z.B. mit Hilfe von schrauben-, niet- oder krampenartigen Befestigungsmitteln an den Gurtenden befestigt werden. Bei Verwendung von U-förmigen Verbindungselementen werden diese derart angeordnet, daß sich ihre Ösen an den Gurtenden in einer kämmenden Lage befinden. Ein Kupplungsstab kann dann zum Verbinden durch die Ösen hindurchgesteckt werden. Bei Verwendung von stegförmigen Verbindungselementen überbrücken diese die Stoßstelle an den Gurtenden und werden jeweils an beiden Gurtenden befestigt.

Beim Befestigen der U-förmigen bzw. stegförmigen Verbindungselemente mit Hilfe von Schrauben, Nieten oder Krampen wird das Förderband in einer Richtung senkrecht zu seiner Hauptebene gestaucht. Dies hat zur Folge, daß das Gurtmaterial versucht, seitlich auszuweichen. Es wird aufgrund des beim Befestigen der Verbindungselemente auftretenden Druckes seitlich weggequetscht. Dies wiederum führt im Ergebnis dazu, daß sich das Förderband in unkontrollierter Weise verformt, wobei sich Wellen in einer Ebene senkrecht zur Förderbandebene bilden und ferner sich die Stirnkante am Gurtende bogenförmig verformt.

Aufgrund der Wellenbildung und aufgrund der bogenförmigen Verformung ist es schwierig, die Ösen der Verbindungselemente an den beiden, zu verbindenden Gurtenden in eine fluchtende Lage zu bringen und den Kupplungsstab durch sämtliche Ösen hindurchzuschieben. Bei Verwendung von stegförmigen Verbindungselementen beeinträchtigt die wellen- und bogenförmige Verformung ebenfalls die Herstellung der Gurtverbindung.

Die wellen- und bogenförmige Verformung der Gurtenden führt ferner während des Betriebes zu einer erhöhten Beanspruchung des Förderbandes. So werden z.B. die Randzonen des Förderbandes stärker auf Zug belastet als die Mittelzone. Die besagten Probleme wurden auch bereits in einem europäischen Patent 0 326 506 B1 behandelt. Nach der Lehre dieses Patentes sollen die Gurtenden konkav-bogenförmig zugeschnitten werden und die Befestigung der Verbindungselemente erfolgt sodann auf einer entsprechend gebogenen Hakeneinlegeschiene. Das Ergebnis soll dann eine gerade verlaufende Stirnkante am Gurtende sein. Tatsächlich tritt diese Wirkung jedoch nur teilweise ein, insbesondere da sich die Wellenbildung hierdurch noch nicht vermeiden läßt. Darüber hinaus ist die Handhabung dieses bekannten Verfahrens und der zugehörigen Vorrichtung äußerst aufwendig, so daß sie sich in der Praxis nicht durchsetzen konnte.

Ferner betrifft die französische Veröffentlichung FR-A-1.278.029 einen Fördergurt mit Gurtenden, die zusätzlich eine armierte Verstärkungsauflage aufweisen. Bei diesen Auflagen handelt es sich um aus Kautschuk bestehende Bänder, die mit Hilfe von Fäden oder Kabeln armiert sind und dem Zweck dienen, ein Ausreißen der Krampen zu verhindern.

Es geht also bei der Lehre der FR-A-1.278.029 darum, nicht armierte Förderbänder oder Gurte an ihren Enden derart zu verstärken, daß die zum Befestigen der U-förmigen Verbindungselemente dienenden Krampen einen sicheren Halt finden.

Der Erfindung liegt die Aufgabe zugrunde, ein Förderband bzw. ein Verfahren zum Verbinden der Gurtenden von Förderbändern und/oder von Förderbandstücken und ein zu diesem Zweck dienendes Verbindungsmittel bereit zu stellen, so daß sich die oben in Verbindung mit der EP 0 326 506 B1 -beschriebene Wellenbildung und die bogenförmige Verformung der Gurtenden beim Befestigen der Verbindungselemente auf einfache und zweckmäßige Weise vermeiden lassen.

Zur Lösung dieser Aufgabe sieht die Erfindung vor, daß als Auflage mindestens je ein hochfestes sowie dehnungsarmes Zugelement auf jedes Gurtende sowie im Abstand von dessen Stirnflächen bzw. Stirnkanten aufgelegt und in einem vorgespannten Zustand befestigt wird.

Das zusätzlich vorgesehene und sich quer zur Transportrichtung erstreckende Zugelement stabilisiert die beim Befestigen der Verbindungselemente mit Hilfe der Krampen wirksam werdenden Verformungen des Gurtmaterials und unterdrückt diese weitgehend. Es tritt daher weder eine Wellenbildung noch eine bogenförmige Verformung der Stirnkante des Gurtendes ein.

In Weiterbildung der Erfindung ist vorgesehen, daß das auf das Gurtende aufgelegte, vorgespannte Zugelement beim Befestigen der Verbindungselemente mit Hilfe von deren Befestigungselementen auf das Gurtende gepreßt wird. Besondere Befestigungsmittel für das Zugelement sind daher nicht erforderlich.

Ein erfindungsgemäßes Förderband weist somit an seinen, miteinander verbundenen Gurtenden zusätzlich mindestens je ein dehnungsarmes sowie hochfestes, vorgespanntes Zugelement auf, das unmittelbar auf der Oberfläche des Gurtendes angeordnet ist und sich über dessen gesamte Breite erstreckt.

Das Verbindungsmittel bzw. Zugelement ist schließlich ein schmaler, länglicher Körper, der insbesondere in Gestalt eines Drahtes oder Drahtseiles vorgesehen ist.

Weitere Merkmale der Erfindung gehen aus Unteransprüchen in Verbindung mit der Beschreibung und der Zeichnung hervor.

Die Erfindung wird nachstehend anhand von zwei Ausführungsbeispielen, die in der Zeichnung dargestellt sind, näher beschrieben. Dabei zeigen:
- Fig. 1:: eine Draufsicht auf zwei miteinander verbundene, jeweils abgeschnittene Gurtenden mit U-förmigen Verbindungselementen und einem Kupplungsstab;
- Fig. 2:: eine Draufsicht auf zwei mit Hilfe von stegförmigen Verbindungselementen miteinander verbundenen, abgeschnittenen Gurtenden;
- Fig. 3:: einen Schnitt längs der Linie III/III in Fig. 1 und
- Fig. 4:: einen Schnitt längs der Linie IV/IV in Fig. 2.

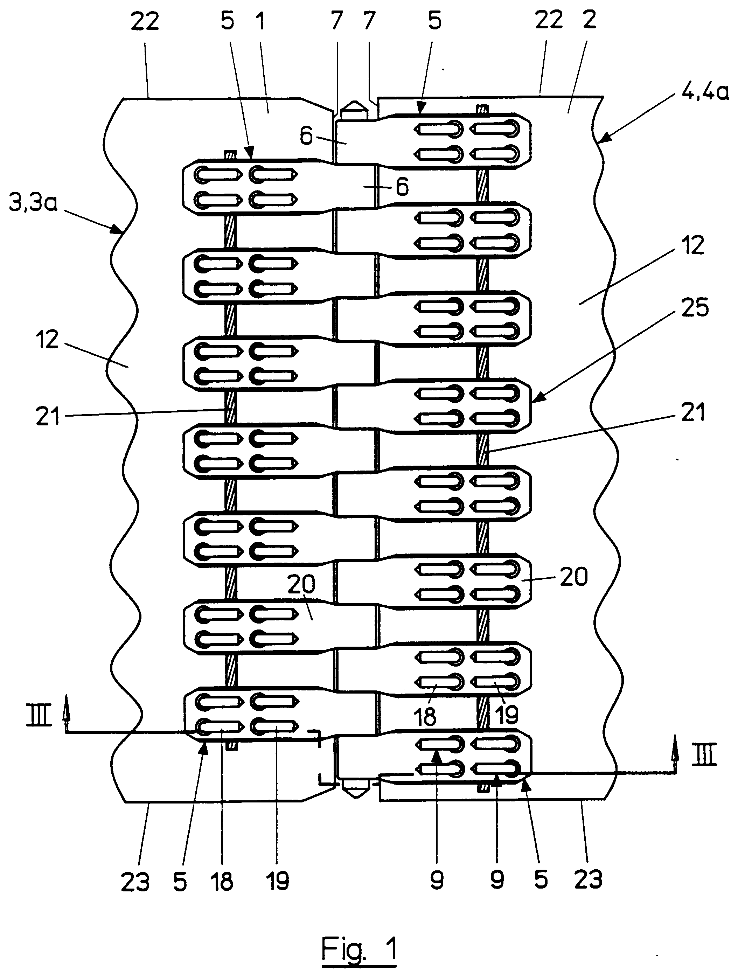

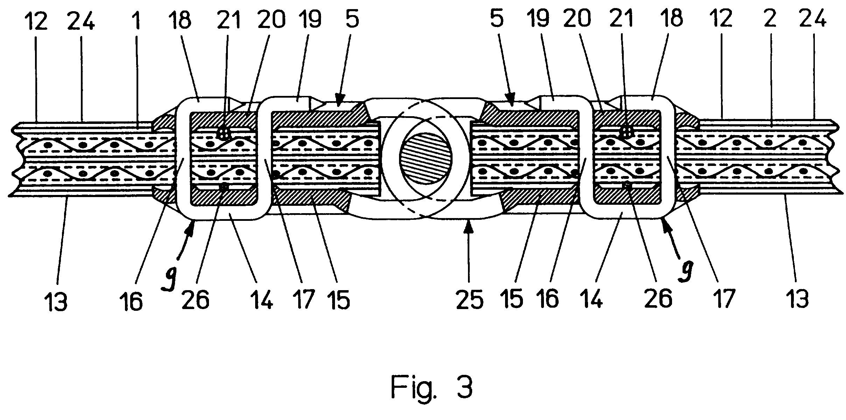

Zum Verbinden von Gurtenden 1 und 2 von Förderbändern 3 und 4 bzw. von Förderbandstücken 3a, 4a werden gemäß dem in den Figuren 1 und 3 dargestellten Ausführungsbeispiel im Querschnitt U-förmige Verbindungselemente 5 benutzt, die jeweils mit einer Öse 6 über die Stirnfläche 7 bzw. Stirnkante des jeweiligen Gurtendes 1, 2 vorstehen und in fluchtender Lage mit Hilfe eines Kupplungsstabes 8 verbunden werden. Die Befestigung der U-förmigen Verbindungselemente 5 an den Gurtenden 1, 2 erfolgt gemäß dem in den Figuren 1 und 3 dargestellten Ausführungsbeispiel mit Hilfe von krampenartigen Befestigungsmitteln 9. Grundsätzlich sind aber auch andersartige Befestigungsmittel möglich oder zumindest denkbar.

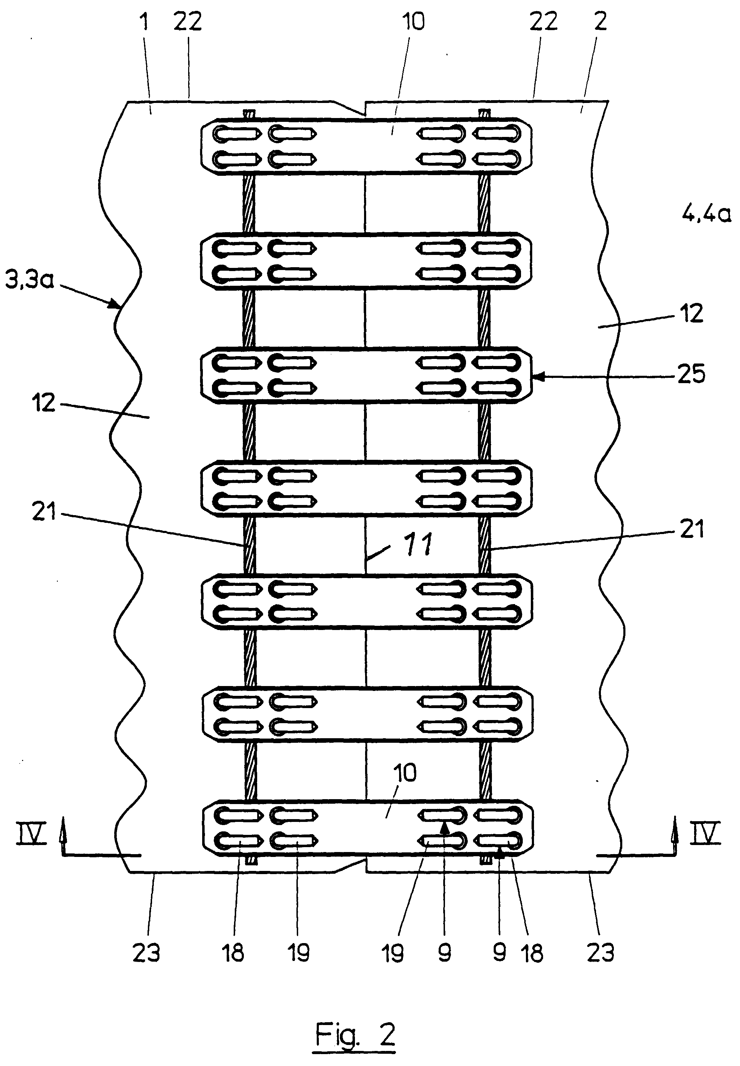

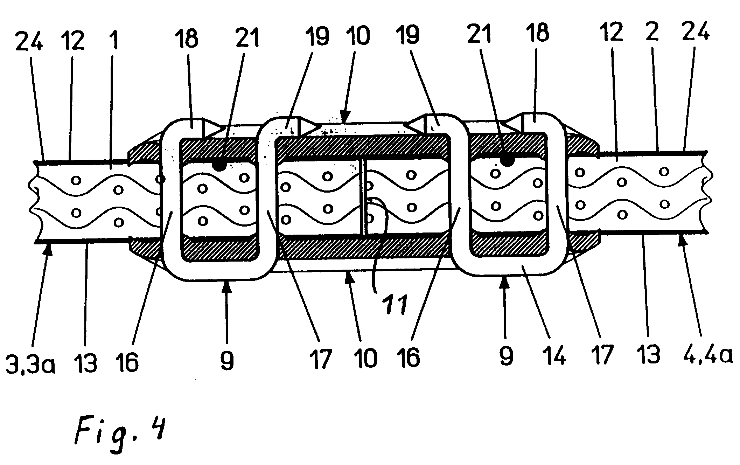

Bei dem in den Figuren 2 und 4 dargestellten Ausführungsbeispiel überbrücken stegförmige Verbindungselemente 10 die Stoßstelle 11, an der die jeweiligen Stirnflächen 7 der beiden Gurtenden 1, 2 unmittelbar oder nahezu aneinander anliegen. Auch diese Verbindungselemente 10, die sich sowohl auf der Oberseite 12 als auch an der Unterseite 13 der Gurtenden 1, 2 befinden, sind mit Hilfe von krampenartigen Befestigungsmitteln 9 an den Gurtenden 1, 2 befestigt.

Bei beiden Ausführungsbeispielen sind die krampenartigen Befestigungsmittel 9 jeweils paarweise vorgesehen und liegen mit ihrem Steg 14 an demjenigen Schenkel 15 des U-förmigen Verbindungselementes 5 bzw. an demjenigen Verbindungselement 10 an, der bzw. das sich an der Unterseite 13 des jeweiligen Gurtendes 1, 2 befindet. Die Schenkel 16 und 17 der krampenartigen Befestigungsmittel 9 durchgreifen die Verbindungselemente 5 und 10 im Bereich der Unterseite 13 und im Bereich der Oberseite 12 der Gurtenden 1 und 2 und liegen mit ihren freien Schenkelenden 18, 19 auf den oberen Schenkeln 20 der Verbindungselemente 5 bzw. auf den im Bereich der Oberseite 12 der Gurtenden 1, 2 angeordneten stegförmigen Verbindungselementen 10 auf. Wenn die freien Schenkelenden 18, 19 umgebogen werden, wird gleichzeitig ein großer Druck auf das zwischen den Schenkeln 15 und 20 des Verbindungselementes 5 gemäß Fig. 3 bzw. auf das zwischen den beiden stegförmigen Verbindungselementen 10 gemäß Fig. 4 befindliche Gurtmaterial ausgeübt.

Wie insbesondere die beiden Figuren 1 und 2 zeigen, ist auf der Oberseite 12 des Gurtendes 1, 2 noch jeweils ein Zugelement 21 angeordnet. Dieses Zugelement 21 erstreckt sich über die gesamte Breite des jeweiligen Gurtendes 1, 2 von dem jeweils ersten Verbindungselement 5 bzw. 10 bis zu dem jeweils letzten Verbindungselement 5 bzw. 10 an jedem Gurtende 1 bzw. 2, d.h. von dem einen Gurtrand bis zum anderen Gurtrand.

Wie die Figuren ferner zeigen, sind die Zugelemente 21 derart an der Oberseite 12 der Gurtenden 1, 2 angeordnet, daß sie unmittelbar unter den oberen Schenkeln 20 der U-förmigen Verbindungselemente 5 bzw. unter denjenigen stegförmigen Verbindungselementen 10 liegen, die sich an der Oberseite 12 der Gurtenden 1, 2 befinden (Fig. 4). Bei der Herstellung der Gurtverbindung werden die Zugelemente 21 z.B. in leicht gespanntem Zustand auf die Oberseiten 12 der Gurtenden 1, 2 aufgelegt und sodann beim Umbiegen der freien Schenkelenden 18, 19 der krampenartigen Befestigungsmittel 9 von den Schenkeln 20 bzw. von den stegförmigen Verbindungselementen 10 in die Oberseite 12 der Gurtenden 1, 2 hineingepreßt.

Die Zugelemente 21 verhindern eine Wellenbildung und eine bogenförmige Verformung der Gurtenden 1, 2 dadurch, daß sie die Verbindungselemente 5 bzw. 10 in einem starren Abstand zueinander fixieren. Das Gurtmaterial kann sich beim Befestigen der Verbindungselemente 5, 10 nicht mehr beliebig unter Streckung bewegen. Es ist durch das bzw. die Zugmittel 21 lagemäßig von der einen Gurtkante 22 bis zur anderen Gurtkante 23 lagemäßig fixiert.

Als Zugelement 21 dient ein Körper, der sich dazu eignet, in einer Richtung auftretende Zugkräfte ohne Veränderung seiner Lage aufzunehmen. Das Zugelement 21 muß daher dehnungsarm und hochfest sein. Zweckmäßigerweise ist das Zugelement 21 ein schmaler, länglicher Körper. Vorzugsweise eignet sich hierzu ein Draht/Drahtseil. Aber auch ein Metallstab mit ausreichender Zugfestigkeit oder andere, entsprechende Körper können verwendet werden.

Wie die Figuren zeigen, wird das Zugelement 21 parallel zur Stirnfläche 7 der Gurtenden 1, 2 und sich über die gesamte Breite des Förderbandes 3, 4 erstreckend angeordnet.

Gemäß Ausführungsbeispiel wird das Zugelement 21 im Abstand von der Stirnfläche 7 bzw. von der Stirnkante des jeweiligen Gurtendes 1, 2 angeordnet und befindet sich ferner bei Verwendung von krampenartigen Befestigungsmitteln 9 zwischen deren Schenkeln 16, 17.

Vor dem Umbiegen der freien Schenkelenden 18, 19 der krampenartigen Befestigungsmittel 9 liegt das Zugelement 21 unmittelbar auf der Oberfläche 24 des jeweiligen Gurtendes 1 bzw. 2 und wird beim Umbiegen der freien Schenkelenden 18, 19 in die Oberseite 12 des jeweiligen Gurtendes 1, 2 hineingepreßt (Figuren 3 und 4).

Die Wirkung des Zugelementes 21 ist umso ausgeprägter, je weicher das Gurtmaterial ist. Dies hat zur Folge, daß der Nutzeffekt vor allem bei Förderbändern 3, 4 mit einem hohen Gummianteil besonders groß ist.

Schließlich ist es zweckmäßig, wenn jeweils mehrere Verbindungselemente 5 gemäß Fig. 3 durch ein z.B. drahtartiges Halteteil 26 zu Gruppen zusammengefaßt sind. Diese drahtartigen Halteteile 26 sind an die unteren Schenkel 15 mehrerer Verbindungselemente 5 angelötet. Sie lösen sich in der Regel von den Schenkeln 15, wenn die freien Schenkel 18 und 19 der krampenartigen Befestigungsmittel 9 umgebogen werden. Die drahtartigen Halteteile 26 besitzen sowohl wegen ihrer geringen Länge als auch aufgrund des Umstandes, daß sie sich während des Befestigungsvorganges von den Schenkeln 15 lösen, keine Bedeutung im Sinne der vorzugsweise in Gestalt von Drahtseilen zur Verwendung gelangenden Zugelemente 21.

Jeweils weitere Zugelemente 21 können auch im Bereich der Unterseite 13 der Gurtenden 1, 2 vorgesehen werden. Notwendig ist dies jedoch nicht.

## Patentansprüche

1. Verfahren zum Verbinden der Gurtenden (1, 2) von Förderbändern (3, 4) und/oder von Förderbandstücken (3a, 4a) mit Hilfe von an den Gurtenden (1, 2) befestigbaren Verbindungselementen (5, 10), wobei eine Auflage an den Gurtenden (1, 2) vorgesehen ist, dadurch gekennzeichnet,
a) daß als Auflage mindestens je ein hochfestes sowie dehnungsarmes Zugelement (21)
b) auf jedes Gurtende (1, 2) sowie im Abstand von dessen Stirnfläche (7)/Stirnkante aufgelegt und in in einem vorgespannten Zustand befestigt wird.

2. Verfahren nach Anspruch 1, dadurch gekennzeichnet, daß das auf das Gurtende (1, 2) aufgelegte, vorgespannte Zugelement (21) beim Befestigen der Verbindungselemente (5, 6) mit Hilfe von deren Befestigungselementen (9) auf das Gurtende (1, 2) gepreßt wird.

3. Verfahren nach einem oder mehreren der vorhergehenden Ansprüche, dadurch gekennzeichnet, daß das Zugelement (21) unmittelbar auf die Oberfläche (24) des Gurtendes (1, 2) gelegt, vorgespannt und parallel zur Stirnfläche (7)/Stirnkante des Gurtendes (1, 2) und sich über dessen gesamte Breite erstreckend an diesem befestigt wird.

4. Verfahren nach einem oder mehreren der vorhergehenden Ansprüche, dadurch gekennzeichnet, daß das Zugelement (21) bei Verwendung von U-förmigen, Ösen (6) für einen Kupplungsstab (8) aufweisenden Verbindungselementen (5) und von krampenartigen Befestigungsmitteln (9) zum Befestigen der Verbindungselemente (5) zwischen den Schenkeln (16, 17) der krampenartigen Befestigungsmittel (9) angeordnet wird.

5. Verfahren nach einem oder mehreren der vorhergehenden Ansprüche, dadurch gekennzeichnet, daß das dehnungsarme sowie hochfeste, in vorgespanntem Zustand befestigte Zugelement (21) zwischen die Stoßstelle (11) der Gurtenden (1, 2) überbrückenden, stegförmigen Verbindungselementen (10) und der Oberfläche (24) des jeweiligen Gurtendes (1, 2) angeordnet wird.

6. Verbindungsmittel zum Verbinden der Gurtenden (1, 2) von Förderbändern (3, 4) und/oder von Förderbandstücken (3a, 4a), wobei die Verbindungsmittel (25) U-förmige bzw. stegförmige Verbindungselemente (5, 10) und schrauben-, niet- oder krampenartige Befestigungsmittel (9) zum Befestigen der Verbindungselemente (5, 10) an den Gurtenden (1, 2) umfassen,
gekennzeichnet durch mindestens ein zusätzlich für jedes Gurtende (1, 2) vorgesehenes, auf die Oberfläche (24) und/oder Unterseite (13) jeweiligen Gurtendes (1, 2) auflegbares, dehnungsarmes sowie hochfestes und in vorgespanntem Zustand befestigbares Zugelement (21).

7. Förderband mit zu verbindenden Gurtenden (1, 2) und/ oder mit zu verbindenden Förderbandstücken (3a, 4a), wobei U-förmige Verbindungselemente (5) mit jeweils einer Öse (6) zum Verbinden mit Hilfe eines Kupplungsstabes (8) oder stegförmige, eine Stoßstelle (11) zwischen den Gurtenden (1, 2) überbrückende Verbindungselemente (10) jeweils mit Hilfe von schrauben-, niet- oder krampenartigen Befestigungsmitteln (9) an den Gurtenden (1, 2) befestigbar sind, dadurch gekennzeichnet, daß zusätzlich mindestens je ein dehnungsarmes sowie hochfestes, vorgespanntes Zugelement (21) jedem Gurtende (1, 2) zugeordnet und unmittelbar auf der Oberfläche (24) und/oder Unterseite (13) des Gurtendes (1, 2) befestigt ist.

8. Förderband nach Anspruch 7, dadurch gekennzeichnet, daß das Zugelement (21) im Abstand von der Stirnfläche (7)/ Stirnkante des Gurtendes (1, 2) angeordnet ist und sich über dessen gesamte Breite erstreckt.

9. Zugelement aus einem hochfesten sowie dehnungsaraen Werkstoff bestimmt zur Durchführung des Verfahrens nach Anspruch 1.

10. Zugelement nach Anspruch 9, dadurch gekennzeichnet, daß es stabförmig ist.

11. Zugelement nach Anspruch 9, dadurch gekennzeichnet, daß es ein Draht/Drahtseil ist.

## Claims

1. A method of connecting the belt ends (1, 2) of conveyor belts (3, 4) and/or conveyor belt portions (3a, 4a) by means of connecting elements (5, 10) which can be fixed to the belt ends (1, 2), wherein a support is provided at the belt ends (1, 2), characterised in that
a) as the support at least one respective high-strength and low-stretch tensile element (21)
b) is put on to each belt end (1, 2) and at a spacing from the end face (7)/end edge thereof and fixed in a prestressed condition.

2. A method according to claim 1 characterised in that the prestressed tensile element (21) which is put on to the belt end (1, 2), upon fixing of the connecting elements (5, 6), is pressed on to the belt end (1, 2) by means of the fixing elements (9) of the connecting elements.

3. A method according to one or more of the preceding claims characterised in that the tensile element (21) is laid directly on the surface (24) of the belt end (1, 2), prestressed and fixed to the belt end (1, 2) parallel to the end face (7)/end edge of the belt end (1, 2) and extending over the entire width thereof.

4. A method according to one or more of the preceding claims characterised in that, when using U-shaped connecting elements (5) having eyes (6) for a coupling bar (8) and staple-like fixing means (9) for fixing the connecting elements (5), the tensile element (21) is arranged between the legs (16, 17) of the staple-like fixing means (9).

5. A method according to one or more of the preceding claims characterised in that the low-stretch and high-strength tensile element (21) which is fixed in the prestressed condition is arranged between strap-like connecting elements (10) which bridge over the joint (11) of the belt ends (1, 2), and the surface (24) of the respective belt end (1, 2).

6. Connecting means for connecting the belt ends (1, 2) of conveyor belts (3, 4) and/or conveyor belt portions (3a, 4a), wherein the connecting means (25) include U-shaped or strap-like connecting elements (5, 10) and screw-like, rivet-like or staple-like fixing means (9) for fixing the connecting elements (5, 10) to the belt ends (1, 2), characterised by at least one low-stretch and high-strength tensile element (21) which is additionally provided for each belt end (1, 2) and which can be put on to the surface (24) and/or the underside (13) of the respective belt end (1, 2) and which can be fixed in the prestressed condition.

7. A conveyor belt having belt ends (1, 2) to be connected and/or having conveyor belt portions (3a, 4a) to be connected, wherein U-shaped connecting elements (5) each with a respective eye (6) for connection by means of a coupling bar (8) or strap-like connecting elements (10) which bridge over a joint (11) between the belt ends (1, 2) can each be fixed to the belt ends by means of screw-like, rivet-like or staple-like fixing means (9), characterised in that in addition at least one respective low-stretch and high-strength prestressed tensile element (21) is associated with each belt end (1, 2) and is fixed directly on the surface (24) and/or the underside (13) of the belt end (1, 2).

8. A conveyor belt according to claim 7 characterised in that the tensile element (21) is arranged at a spacing from the end face (7)/end edge of the belt end (1, 2) and extends over the entire width thereof.

9. A tensile element comprising a high-strength and low-stretch material intended for carrying out the method according to claim 1.

10. A tensile element according to claim 9 characterised in that it is in bar form.

11. A tensile element according to claim 9 characterised in that it is a wire/wire cable.

## Revendications

1. Procédé pour relier les extrémités de courroie (1, 2) de bandes transporteuses (3, 4) et/ou de tronçons de bande transporteuse (3a, 4a) à l'aide d'éléments de jonction (5, 10) pouvant être fixés aux extrémités de courroie (1, 2), un revêtement étant prévu sur les extrémités de courroie (1, 2), caractérisé
a) en ce qu'en tant que revêtement, au moins un élément de traction (21), hautement résistant et peu extensible est placé
b) sur chaque extrémité de courroie (1, 2) ainsi qu'à distance de leur surface frontale (7)/ bord frontal et est fixé à l'état précontraint.

2. Procédé selon la revendication 1, caractérisé en ce que l'élément de traction (21) précontraint, placé sur l'extrémité de courroie (1, 2), est comprimé sur l'extrémité de courroie (1, 2) lors de la fixation des éléments de jonction (5, 6) à l'aide de leurs éléments de fixation (9).

3. Procédé selon l'une ou plusieurs des revendications précédentes, caractérisé en ce que l'élément de traction (21) est directement posé sur la surface (24) de l'extrémité de courroie (1, 2), est précontraint et est fixé sur l'extrémité de courroie (1, 2) parallèlement à la surface frontale (7)/bord frontal de l'extrémité de courroie (1, 2) en s'étendant sur toute la largeur de cette dernière.

4. Procédé selon l'une ou plusieurs des revendications précédentes, caractérisé en ce que l'élément de traction (21) est disposé entre les branches (16, 17) des moyens de fixation (9) formant crampon, dans le cas de l'utilisation d'éléments de jonction (5), présentant des oeillets (6) en forme de U pour une barre d'accouplement (8) et de moyens de fixation (9) formant crampon pour la fixation des éléments de jonction (5).

5. Procédé selon l'une ou plusieurs des revendications précédentes, caractérisé en ce que l'élément de traction (21) peu extensible et hautement résistant, fixé à l'état précontraint, est disposé entre les éléments de jonction (10) en forme de barrettes, franchissant le point de buttée (11) des extrémités de courroie (1, 2), et la surface (24) de l'extrémité de courroie respective (1, 2).

6. Moyen de jonction pour relier les extrémités de courroie (1, 2) de bandes transporteuses (3, 4) et/ou de tronçons de bande transporteuse (3a, 4a), les moyens de jonction (25) comprenant des éléments de jonction (5, 10) en forme de U respectivement en forme de barrettes et des moyens de fixation (9) du type vis, rivet ou crampon, pour la fixation des éléments de jonction (5, 10) sur les extrémités de courroie (1, 2), caractérisé par au moins un élément de traction (21), prévu en supplément pour chaque extrémité de courroie (1, 2) peu extensible et hautement résistant, pouvant être placé sur la surface (24) et/ou sur la face inférieure (13) de l'extrémité de courroie respective (1, 2), , et pouvant être fixé à l'état précontraint.

7. Bande transporteuse comprenant des extrémités de courroie (1, 2) à relier et/ou des tronçons de bande transporteuse (3a, 4a) à relier, des éléments de jonction (5) en U, munis d'un oeillet (6) pour la liaison d'une barre d'accouplement (8), ou des éléments de jonction (10), en forme de barrettes et franchissant un point de butée entre les deux extrémités de courroie (1, 2), pouvant être respectivement fixés à l'aide de moyens de fixation (9) du type vis, rivet ou crampon, aux extrémités de courroie (1, 2), caractérisée en ce qu'au moins en supplément un élément de traction (21), précontraint, peu extensible et hautement résistant, est associé à chaque extrémité de courroie (1, 2) et est directement fixé sur la surface (24) et/ou sur la face inférieure (13) de l'extrémité de courroie (1, 2).

8. Bande transporteuse selon la revendication 7, caractérisé en ce que l'élément de traction (21) est disposé à distance de la surface frontale (7)/bord latéral de l'extrémité de courroie (1, 2) et s'étend sur toute la largeur de cette dernière.

9. Elément de traction se composant d'un matériau, hautement résistant et peu extensible destiné à la mise en oeuvre du procédé selon la revendication 1.

10. Elément de traction selon la revendication 9, caractérisé en ce qu'il a la forme d'une barre.

11. Elément de traction selon la revendication 9, caractérisé en ce que c'est un fil métallique/câble métallique
